(19) Europäisches Patentamt
European Patent Office
Office européen des brevets

(11) **EP 2 646 303 B1**

(12) **EUROPÄISCHE PATENTSCHRIFT**

(45) Veröffentlichungstag und Bekanntmachung des Hinweises auf die Patenterteilung:
**01.03.2017  Patentblatt 2017/09**

(21) Anmeldenummer: **11764203.3**

(22) Anmeldetag: **04.10.2011**

(51) Int Cl.:
*B60W 20/00* (2016.01)     *B60L 15/20* (2006.01)
*B60L 11/00* (2006.01)     *B60W 30/188* (2012.01)
*B60K 6/46* (2007.10)

(86) Internationale Anmeldenummer:
**PCT/EP2011/067316**

(87) Internationale Veröffentlichungsnummer:
**WO 2012/072316 (07.06.2012 Gazette 2012/23)**

(54) **VERFAHREN UND VORRICHTUNG ZUM ANTRIEB EINES KRAFTFAHRZEUGES**

METHOD AND DEVICE FOR DRIVING A MOTOR VEHICLE

PROCÉDÉ ET DISPOSITIF POUR ENTRAÎNER UN VÉHICULE À MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.12.2010  DE 102010062379**

(43) Veröffentlichungstag der Anmeldung:
**09.10.2013  Patentblatt 2013/41**

(73) Patentinhaber: **Robert Bosch GmbH**
**70442 Stuttgart (DE)**

(72) Erfinder: **FALKENSTEIN, Jens-Werner**
**73434 Aalen (DE)**

(56) Entgegenhaltungen:
**EP-A2- 2 070 799     WO-A1-2008/128416**
**DE-C1- 19 831 487     JP-A- 2003 343 303**

EP 2 646 303 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

Printed by Jouve, 75001 PARIS (FR)

**Beschreibung**

Stand der Technik

Die Erfindung betrifft ein Verfahren zum Antrieb eines Kraftfahrzeuges, das mindestens ein Antriebsaggregat in Form einer Elektromaschine aufweist, welchem eine Momentenanforderung zugeführt wird sowie eine Vorrichtung zur Durchführung des Verfahrens.

Antriebsaggregate in Kraftfahrzeugen oder Kraftfahrzeugantrieben, wie Verbrennungsmotoren, Elektromaschinen oder Hydraulikmotoren reagieren auf Lastsprünge, die beispielsweise durch die Anforderung des Fahrers hervorgerufen werden, nur verzögert. Sie weisen somit eine begrenzte Ansteuerdynamik auf. Wenn die Antriebsaggregate wirkungsgradoptimal betrieben werden, ist die Ansteuerdynamik meist noch stärker begrenzt.

Aus der DE 101 49 905 B4 ist ein Steuersystem für ein Hybrid-Elektrofahrzeug zur Vorwegnahme der Notwendigkeit eines Wechsels der Betriebsart bekannt, wobei das Hybrid-Elektrofahrzeug neben einem Elektromotor einen Verbrennungsmotor aufweist. Mittels des Steuersystems wird eine Vorwegnahmefunktion ausgeführt, die den Wert und die Größe der Veränderung der, durch den Fahrer ausgelösten Gaspedalstellung und der Fahrzeuggeschwindigkeit zur Berechnung eines Leistungsbedarfs verwendet und die verbleibende Zeit bestimmt, bis der Leistungsbedarf eine bestimmte Schwelle nahe dem maximalen Vermögen des Elektromotors überschreitet. Dadurch sollen Fehlstarts des Verbrennungsmotors wegen zu frühen Anlassens bzw. Leistungslücken durch nicht zu frühes Anlassen des Verbrennungsmotors reduziert oder eliminiert werden.

Aus der EP 2 070 799 A2 ist es bekannt, eine vorausschauende Bestimmung von Antriebsparametern durchzuführen.

Offenbarung der Erfindung

Bei einem Verfahren zum Antrieb eines Kraftfahrzeuges gemäß dem Kennzeichen des Anspruchs 1 wird ein, in Form einer Elektromaschine ausgebildetes Antriebsaggregat bedarfsgerecht und bei möglichst hohem Wirkungsgrad betrieben, auch wenn die Ansteuerdynamik dadurch zusätzlich begrenzt wird. Dadurch, dass in Abhängigkeit der Momentenanforderung mindestens ein Antriebsparameter der Elektromaschine und/oder des Kraftfahrzeuges vorausschauend bestimmt wird, wobei die Elektromaschine und/oder eine Energieversorgungseinheit der Elektromaschine in Abhängigkeit des mindestens einen, vorausschauend bestimmten Antriebsparameters vorgesteuert wird, werden Lastspitzen an der Energieversorgungseinheit aus Wirkungsgrad- und Lebensdauergründen durch geeignete Steuerung der Antriebsaggregate und/oder die Energieversorgungseinheit reduziert. Dadurch werden das Antriebsaggregat und/oder der Energieversorgungseinheit des Kraftfahrzeuges kostengünstiger. Gewichts- und Bauraumanforderungen werden reduziert. Es erfolgen schnelle Reaktionen auf eine Momentenanforderung, auch bei begrenzter Ansteuerdynamik der Elektromaschine oder der Energieversorgungseinheit.

Vorteilhafterweise werden mehrere Antriebsparameter der Elektromaschine und/oder des Kraftfahrzeuges vorausschauend ermittelt, die gleichzeitig zu einem späteren Zeitpunkt wirksam werden. Die vorausschauende Bestimmung der Antriebsparameter wird dabei zeitlich aufeinander abgestimmt, was bedeutet, dass die zum Zeitpunkt t vorausbestimmten Werte zu einem gemeinsamen späteren Zeitpunkt $t+\Delta t$ von den dann aktuellen Antriebsparametern der Elektromaschine und/oder des Kraftfahrzeuges näherungsweise erreicht werden. Durch eine solche vorausschauende Betrachtung wird zuverlässig sichergestellt, dass die gewünschten Antriebsparameter immer zum richtigen Zeitpunkt für die Steuerung des Antriebsaggregates zur Verfügung stehen. Eine Vorsteuerung, die mehrere vorausschauend bestimmte Parameter berücksichtigt, wird durch die zeitlich aufeinander abgestimmte vorausschauende Bestimmung verbessert.

Erfindungsgemäß wird der Antriebsparameter in Abhängigkeit seiner Dynamik zu einem vorgegebenen Zeitpunkt ermittelt und zu einem späteren Zeitpunkt wirksam. Das Verfahren kann im Sinne eines Abtastsystems zu einzelnen Abtastschritten wiederholt abgearbeitet werden. Dabei wird in einem, zum aktuellen Zeitpunkt t1 zugehörigen Abtastschritt ein Wert des Antriebsparameters ermittelt, der erst zu einem späteren (zukünftigen) Zeitpunkt $t1+\Delta t$ wirksam wird. Entsprechend wird im nächsten Abtastschritt, zu dem dann aktuellen Zeitpunkt t2, ein Wert des Antriebsparameters ermittelt, der erst um die Zeitspanne $\Delta t$ nach dem Zeitpunkt t2 wirksam wird. Die Ermittlung des Antriebsparameters in Abhängigkeit seiner Dynamik erfolgt beispielsweise anhand des zeitlichen Verlaufes des Antriebsparameters von einem früheren bis zum aktuellen Zeitpunkt beziehungsweise unter Verwendung eines mathematischen Modells beispielsweise der Elektromaschine und/oder des Kraftfahrzeuges. Das mathematische Modell beschreibt das Verhalten des Antriebsparameters und seine Reaktion auf Einflüsse wie z.B. einen Fahrzustand des Kraftfahrzeuges und die Momentenanforderung. Die Ermittlung des Antriebsparameters in Abhängigkeit seiner Dynamik berücksichtigt beispielsweise Bedingungen, die aus den Informationen eines Sicherheitssystems wie ESP-Systems, eines Fahrerassistenzsystems wie Navigationssystem, Abstandsregeltempomat oder aus Informationen von Umgebungssensoren wie Steigungs-, Temperatur- und Regensensoren gewonnen werden. Beispielsweise beeinflussen eine Höchstgeschwindigkeitsbegrenzung, ein bei Überholverbot vorausfahrendes Fahrzeug oder eine nasse bzw. vereiste Fahrbahn verbunden mit ESP-Eingriffen die Dynamik des Antriebsparameters, indem eine Fahrzeugbeschleunigung oder eine Erhöhung der Momentenanforderung nur begrenzt möglich ist. Auch die Fahrbahnsteigung beeinflusst die Dynamik des Antriebsparameters. Beispielsweise werden aus Karteninformationen kommende Ereignisse wie Ortsdurchfahrten, Kurven oder Steigungen entnommen. Zusammen mit einem Fahrermodel, das anhand des früheren Verhaltens des Fahrers adaptiert wird, lässt sich auf ein zukünftiges Verhalten wie Gas- und Bremspedalbetätigung schließen und damit auch auf die Dynamik des Antriebsparameters.

Erfindungsgemäß wird auf der Grundlage des, zu dem vorgegebenen Zeitpunkt vorausschauend bestimmten Antriebsparameters ein Sollwert für mindestens einen Betriebsparameter der Elektromaschine und/oder der Energieversorgungseinheit ermittelt. Der Betriebsparameter folgt dem Sollwert aufgrund der Ansteuerdynamik der Elektromaschine oder der Energieversorgungseinheit verzögert. Der Sollwert wird unter Berücksichtigung dieser Ansteuerdynamik ermittelt. Betriebsparameter schaffen dabei die Voraussetzung für die Antriebsparameter der Elektromaschine und/oder des Kraftfahrzeuges. Der Sollwert wird auf der Grundlage der zu den Zeitpunkten t1 bzw. t2 vorausschauend bestimmten Antriebsparameter ermittelt.

In einer Weiterbildung wird der spätere Zeitpunkt in Abhängigkeit der Dynamik der Elektromaschine oder der Dynamik der Energieversorgungseinheit so festgelegt, dass der Betriebsparameter den Sollwert zu dem späteren Zeitpunkt erreicht. Dabei folgt der Betriebsparameter dem Sollwert entsprechend der Ansteuerdynamik der Elektromaschine oder der Energieversorgungseinheit verzögert. Somit wird die vorausschauende Bestimmung des Antriebsparameters zeitlich auf die Ansteuerdynamik abgestimmt, was heißt, dass der Betriebsparameter den zum Zeitpunkt t ermittelten bzw. vorgegebenen Sollwert vorzugsweise zu dem späteren Zeitpunkt t+Δt erreicht, zu dem auch der zum Zeitpunkt t vorausschauend bestimmte Antriebsparameter wirksam wird.

In einer Ausführungsform werden bei der Ermittlung des Sollwertes des mindestens einen Betriebsparameters die aktuellen und/oder vorausbestimmten zukünftigen Betriebszustände von Nebenaggregaten berücksichtigt. Zu den berücksichtigten Nebenaggregaten gehören beispielsweise ein elektrisches Lenksystem, ein elektrisches Bremssystem oder ein elektrisches Klimasystem des Kraftfahrzeuges. Solche Nebenaggregate benötigen Energie, die von der Energieversorgungseinheit oder der Elektromaschine im Generatorbetrieb bereitgestellt wird und das Betriebsverhalten der Energieversorgungseinheit und der Elektromaschine beeinflussen.

Ferner wird erfindungsgemäß bei der Ermittlung des Sollwertes eine Möglichkeit zur Überschreitung der vorausschauend ermittelten Antriebsparameter berücksichtigt. Dies hat den Vorteil, dass Leistungs- oder Drehmomentreserven für die Antriebsaggregate als auch für Nebenaggregate vorgehalten werden können.

In einer Ausgestaltung ist der Betriebsparameter eine Versorgungsspannung oder eine Versorgungsleistung der Energieversorgungseinheit oder eine Magnetisierung der Elektromaschine.

Vorteilhafterweise bleibt der Sollwert mindestens eines Betriebsparameters unbeeinflusst von kurzzeitigen Eingriffen in den Antriebsstrang des Kraftfahrzeuges. Dadurch wird die Steuerung des Antriebsstranges nur bei langzeitigen Eingriffen beeinflusst. Diese Nichtbeeinflussung soll insbesondere bei kurzzeitig andauernden Eingriffen erfolgen, welche die Antriebsleistung betragsmäßig reduzieren, beispielsweise bei kurzzeitig reduzierend wirkenden Eingriffen eines Fahrstabilitätssystems.

In einer weiteren Variante wird der vorausschauend bestimmte, mindestens eine Antriebsparameter und/oder der Sollwert mindestens eines Betriebsparameters bei einer anstehenden Übersetzungsänderung im Antriebsstrang basierend auf einer vorausschauend bestimmten Übersetzung ermittelt, bevor die aktuelle Übersetzung die vorausschauend bestimmten Übersetzung entspricht. Das erfindungsgemäße Verfahren ist somit auch bei Änderungen im Antriebsstrang, beispielsweise der Getriebeschaltung, einsetzbar.

In einer Ausgestaltung wird der vorausschauend bestimmte Antriebsparameter mittels Antriebsparametergrenzen und/oder der Sollwert mindestens eines Betriebsparameters mittels Betriebsparametergrenzen plausibilisiert bzw. begrenzt. Dabei werden konstruktiv vorgegebene oder physikalisch oder von der Steuerung vorgegebene Grenzen der Aggregate berücksichtigt, so dass auch bei aktiven Begrenzungen der vorausschauend bestimmte Antriebparameter zu einem späteren Zeitpunkt wirksam wird und/oder der Betriebsparameter den Sollwert zu einem späteren Zeitpunkt erreicht.

Insbesondere werden die Antriebsparametergrenzen und/oder Betriebsparametergrenzen vorausschauend bestimmt. Die Plausibilisierung oder Begrenzung der Antriebsparameter bzw. der Sollwerte der Betriebsparameter erfolgt vorzugsweise für den späteren Zeitpunkt, zu welchem diese wirksam werden. Die Plausibilisierung erfolgt mit den vorausschauend bestimmten Antriebsparametergrenzen und/oder Betriebsparametergrenzen, die ebenfalls zu dem späteren Zeitpunkt wirksam werden. Das ermöglicht eine zuverlässige Steuerung.

Vorteilhafterweise stellt der Antriebsparameter ein Antriebsmoment, eine Antriebsdrehzahl und/oder eine Antriebsleistung dar.

In einer anderen Ausführungsform werden das Antriebsmoment, die Antriebsdrehzahl und/oder die Antriebsleistung anhand des zeitlichen Verlaufes eines Antriebssollmomentes oder einer Antriebssollleistung vorausschauend bestimmt. Durch die Feststellung des zeitlichen Verlaufes wird das dynamische Verhalten des Antriebssollmomentes oder einer Antriebssollleistung berücksichtigt.

Vorteilhafterweise werden das Antriebsmoment, die Antriebsdrehzahl und/oder die Antriebsleistung anhand des dynamischen Verhaltens mindestens einer verzögernd auf diese wirkende Einflussgröße vorausschauend bestimmt. Bei einem verzögernd wirkenden Element handelt es sich beispielsweise um ein Filter, eine Gradientenbegrenzung oder ein Fahrbarkeitsfilter. Da jede Momentenanforderung meist durch ein solches verzögernd wirkendes Element behandelt wird führt die Berücksichtigung der verzögernd wirkenden Elemente zu einer Verbesserung der Genauigkeit der Steuerung bei der vorausschauenden Bestimmung des Antriebsmomentes, der zukünftigen Antriebsdrehzahl und/oder der zukünftigen Antriebsleistung. Die Eigenschaften des verzögernd wirkenden Elements sind meist bekannt, so dass diese bei der vorausschauenden Bestimmung vorteilhaft berücksichtigt werden können.

Weiterhin werden das Antriebsmoment, die Antriebsdrehzahl und/oder die Antriebsleistung anhand des zeitlichen Verlaufes einer gemessenen oder modellierten oder beobachteten Antriebsstrangdrehzahl oder Fahrzeuglängsbewegung ermittelt. Dies hat den Vorteil, dass die Vorsteuerung der Elektromaschine und/oder der Energieversorgungseinheit in Abhängigkeit des Fahrzustandes und der Umgebungsbedingungen des Kraftfahrzeuges erfolgt.

Eine Weiterbildung betrifft eine Vorrichtung zum Antrieb eines Kraftfahrzeuges, das mindestens ein Antriebsaggregat in Form einer Elektromaschine aufweist, welchem eine Momentenanforderung zugeführt wird. Um das Antriebsaggregat bedarfsgerecht und mit einem möglichst hohen Wirkungsgrad zu betreiben, sind Mittel vorhanden, die in Abhängigkeit der Momentenanforderung mindestens einen Antriebsparameter der Elektromaschine und/oder des Kraftfahrzeuges vorausschauend bestimmen und die die Elektromaschine und/oder die Energieversorgungseinheit der Elektromaschine mit dem mindestens einen vorausschauend bestimmten Antriebsparameter vorsteuern. Dies hat den Vorteil, dass Lastspitzen an der Energieversorgungseinheit, wie beispielsweise einer Batterie, reduziert werden, wobei in den meisten Fällen auf zusätzliche Energieversorgungseinheiten für die Elektromaschine verzichtet werden kann. Dies führt zu einer kosten-, gewichts- und bauraumgünstigen Ausgestaltung des Antriebsstranges. Daneben erfolgen schnelle Reaktionen der Elektromaschine und/oder der Energieversorgungseinheit der Elektromaschine auf eine Momentenanforderung auch bei begrenzter Ansteuerdynamik. Eine begrenzte Ansteuerdynamik der Elektromaschine oder der Energieversorgungseinheit wird beispielsweise durch einen wirkungsgradoptimierten Betrieb der Elektromaschine oder der Energieversorgungseinheit hervorgerufen.

In einer Ausgestaltung ist die Energieversorgungseinheit als Brennstoffzelle oder als eine, im Generatorbetrieb betriebene weitere Elektromaschine oder als Kombination einer weiteren Elektromaschine mit einem Verbrennungsmotor, d.h. Range Extender, ausgebildet.

Die Erfindung lässt zahlreiche Ausführungsformen zu. Eine davon soll anhand der in der Zeichnung dargestellten Figuren näher erläutert werden.

Es zeigt:

Figur 1: Prinzipdarstellung eines Antriebsstranges mit einer als Range Extender ausgebildeten Kombination einer Elektromaschine mit einem Verbrennungsmotor

Figur 2: ein Signalflussdiagramm für die Steuerung des Range Extenders und des Antriebsstranges nach Figur 1

Gleiche Merkmale sind mit gleichen Bezugszeichen gekennzeichnet.

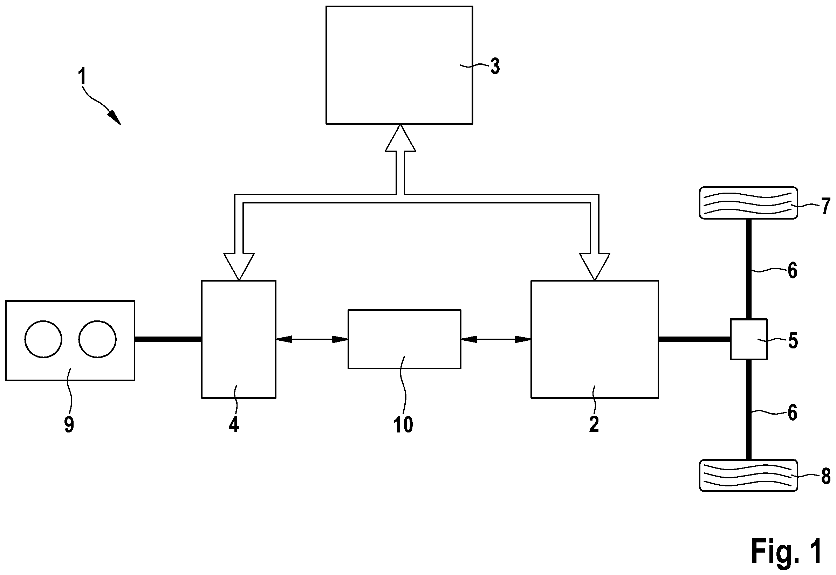

In Figur 1 ist ein Antriebsstrang 1 dargestellt, welcher eine Elektromaschine 2 und einen Verbrennungsmotor 9 aufweist. Der Verbrennungsmotor 9 ist dabei mit einer zweiten Elektromaschine 4 verbunden, wobei die Elektromaschinen 2 und 4 bzw. deren nicht weiter dargestellten Ansteuereinheiten auf eine Steuereinheit 10 führen und mit dieser bidirektional Daten austauschen. Die Steuereinheit 10 kommuniziert auch mit dem Verbrennungsmotor 9 und der Batterie 3. Die Elektromaschine 2 führt weiterhin auf ein Differential 5, das auf zwei Antriebswellen 6 des Kraftfahrzeuges wirkt, welche wiederum die Antriebsräder 7 und 8 antreiben, die an den Antriebswellen 6 befestigt sind. Die Batterie 3 ist mit den nicht dargestellten Ansteuereinheiten der Elektromaschinen 2 und 4 gekoppelt. Der Verbrennungsmotor 9 und die zweite Elektromaschine 4 bilden ein Verbrennungsmotor-Generatorsystem (einen Range-Extender), das während der Fahrt elektrische Energie erzeugen und damit die Batterie 3 laden beziehungsweise die Elektromaschine 2 versorgen kann.

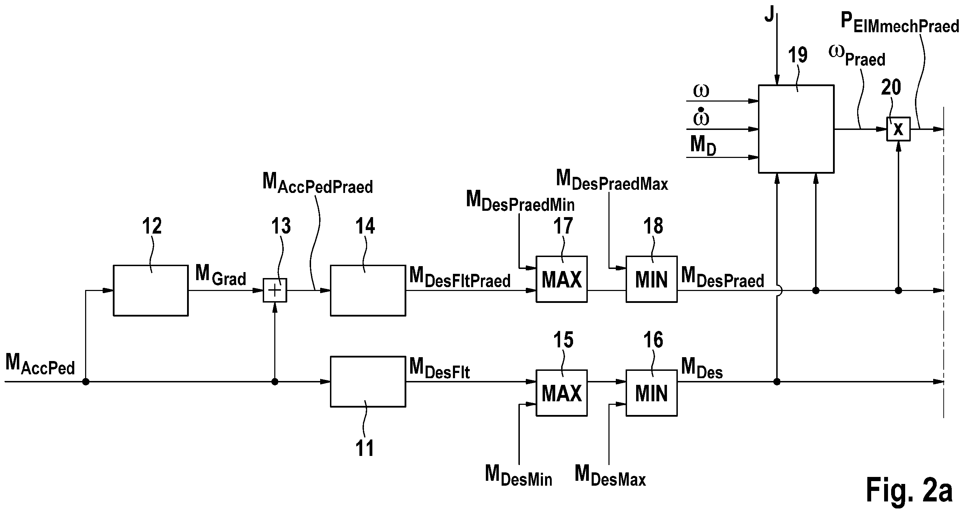

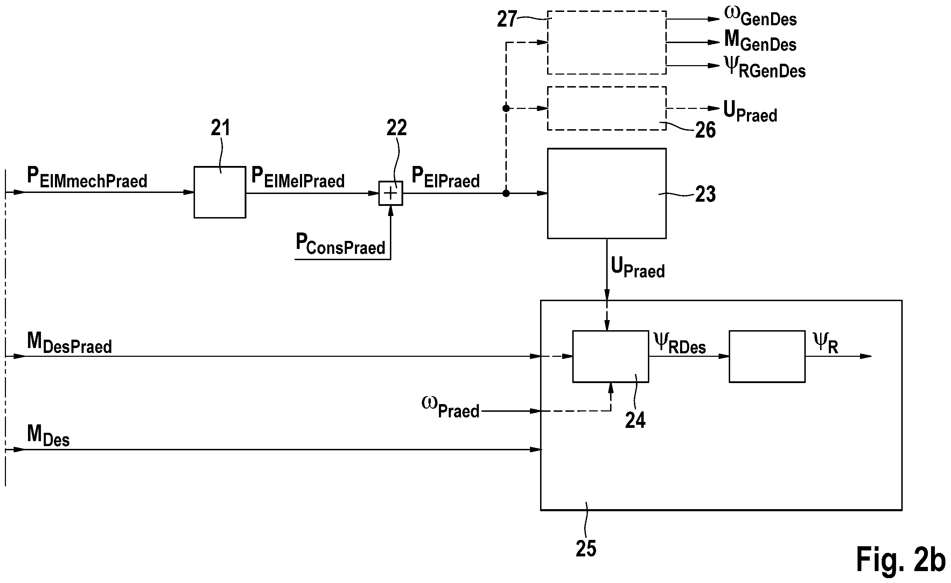

Figur 2 zeigt beispielhaft ein Signalflussdiagramm für die erfindungsgemäße Steuerung eines Kraftfahrzeuges, bei welcher die Elektromaschine 2 und die Elektromaschine 4 gemäß Figur 1 als Asynchronmaschine oder fremderregte Synchronmaschine ausgebildet ist. Die Steuerung des Kraftfahrzeuges ist in der Steuereinheit 10 abgelegt.

Eine Momentenanforderung in Form eines Sollmomentes $M_{AccPed}$ wird aus der Stellung eines Fahrpedals ermittelt und/oder von einem Fahrerassistenzsystem beeinflusst. Je nach eingesetzter Triebstrangstruktur kann die Momentenanforderung auch von einem Leerlaufregler, von einer Maximaldrehzahlbegrenzung, einer Geschwindigkeitsregelanlage, einem Abstandsregeltempomat, einer Maximalgeschwindigkeitsbegrenzung, einem Kriechregler, einer Anfahrunterstützung, von Eingriffen von automatisierten Getrieben und/oder Sicherheitssystemen, wie z.B. dem ESP, beeinflusst werden. Um Triebstrangschwingungen zu vermeiden, erfolgt in einem Fahrbarkeitsfilter 11 eine Tiefpaßfilterung des Solldrehmomentes $M_{AccPed}$. Das entstehende gefilterte Sollmoment $M_{DesFlt}$ ist im Bereich seines Nulldurchganges zusätzlich gradientenbegrenzt, um Lastschläge beim Durchlaufen von Losen bzw. Spiel im Triebstrang zu vermeiden. Das von der Elektromaschine 2 erzeugte Drehmoment wird mittels eines Solldrehmoments $M_{Des}$ vorgegeben. Im Normalbetrieb (d.h. ohne Eingriffe eines Fahrstabilitätssystems, Getriebesystems oder einer Maximaldrehzahlbegrenzung) entspricht das Solldrehmoment $M_{Des}$ für die Elektromaschine 2 dem Solldrehmoment $M_{DesFlt}$, welches vom Fahrer über die Stellung des Fahrpedals beeinflusst wird.

Aus dem zeitlichen Verlauf des Sollmomentes $M_{AccPed}(t)$ wird ein vorausschauend bestimmtes Solldrehmoment $M_{AccPedPraed}$ ermittelt. In Figur 2 erfolgt dies im Block 12, der die zeitliche Ableitung des Sollmomentes $M_{AccPed}(t)$ ermittelt und in Abhängigkeit davon einen zusätzlichen Momentenanteil $M_{Grad}$ ausgibt, der zum Solldrehmoment $M_{AccPed}$ im Block 13 addiert wird. Bei ansteigendem Solldrehmoment $M_{AccPed}$ ist $M_{Grad}$ positiv, so dass das vorausschauend bestimmte Solldrehmoment $M_{AccPedPraed}$ dem Solldrehmoment $M_{AccPed}$ vorauseilt. Dabei wird davon ausgegangen, dass bei ansteigendem Fahrpedalwinkel das vom Fahrer zukünftig angeforderte Sollmoment über dem aktuellen Sollmoment $M_{AccPed}$ liegt. Die Ermittlung des vorausschauend bestimmten Solldrehmoments $M_{AccPedPraed}$ kann dabei auch von einer Fahrertyperkennung beeinflusst werden.

Wird das Solldrehmoment $M_{AccPed}$ von einer Drehzahl beeinflusst, so kann zur Ermittlung des vorausschauend bestimmten Sollmomentes $M_{AccPedPraed}$ eine vorausschauend bestimmte Drehzahl entsprechend der nachfolgend beschriebenen vorausschauenden Bestimmung einer Winkelgeschwindigkeit $\omega_{Praed}$ benutzt werden.

Das vorausschauend bestimmte Solldrehmoment $M_{AccPedPraed}$ wird in einem optionalen Block 14 tiefpaßgefiltert und ergibt ein gefiltertes, vorausschauend bestimmtes Solldrehmoment $M_{DesFltPraed}$. Die dabei auftretende Verzögerung im Filter 14 ist geringer als die Verzögerung im Fahrbarkeitsfilter 11, so dass sich durch die unterschiedliche Dynamik der beiden Blöcke 11 bzw. 14 eine zusätzliche Vorauseilung des vorausschauend bestimmten, gefilterten Solldrehmomentes $M_{DesFltPraed}$ gegenüber dem gefilterten Sollmoment $M_{DesFlt}$ ergibt. Je nach dynamischem Verhalten des Filters 14 kann die Höhe der gewünschten Vorauseilung eingestellt werden. Im Normalbetrieb entspricht ein vorausschauend bestimmtes Solldrehmoment $M_{DesPraed}$ für die Elektromaschine 2 dem gefilterten, vorausschauend bestimmten Solldrehmoment $M_{DesFltPraed}$.

Eingriffe, z.B. eines Fahrstabilitätssystems, werden über die Momentengrenzen $M_{DesMax}$ und $M_{DesMin}$ einkoordiniert. Kurzzeitige Eingriffe des Fahrstabilitätssystems, kurzzeitige Eingriffe zur Maximaldrehzahlbegrenzung oder kurzzeitige Getriebeschalteingriffe, die das von der Elektromaschine 2 erzeugte Moment betragsmäßig reduzieren, wirken nur auf das Solldrehmoment $M_{Des}$ für die Elektromaschine 2 (Block 15, 16). Diese kurzzeitigen Eingriffe beeinflussen jedoch nicht das vorausschauend bestimmte Solldrehmoment $M_{DesPraed}$. Kurzzeitige Eingriffe, die das von der Elektromaschine 2 erzeugte Moment betragsmäßig erhöhen, beeinflussen über die Momentengrenzen $M_{DesPraedMax}$ und $M_{DesPraedMin}$ auch das vorausschauend bestimmte Solldrehmoment $M_{DesPraed}$ (Block 17, 18). Damit wird das von Verbrennungsmotor 9 und der zweiten Elektromaschine (4) gebildete Verbrennungsmotor- Generatorsystem (Range-Extender) beeinflusst, um die erzeugte elektrische Energie an die betragsmäßige Momentenerhöhung der Elektromaschine 2 anzupassen. Bevorzugt werden die Momentengrenzen $M_{DesPraedMax}$ und $M_{DesPraedMin}$ vorausschauend bestimmt.

Längerfristige Eingriffe, wie Getriebeschutzeingriffe oder längerfristige Eingriffe eines Fahrstabilitätssystems, beeinflussen über die Momentengrenzen $M_{DesMax}$ und $M_{DesMin}$ das Solldrehmoment $M_{Des}$ und über die Momentengrenzen $M_{DesPraed-Max}$ und $M_{DesPraedMin}$ das vorausschauend bestimmte Solldrehmoment $M_{DesPraed}$.

Im Block 19 ist ein dynamisches Modell des Fahrzeuges hinterlegt, das aus dem zeitlichen Verlauf der Drehzahl bzw. Winkelgeschwindigkeit $\omega(t)$ der Elektromaschine 2 eine vorausschauend bestimmte Winkelgeschwindigkeit $\omega_{Praed}$ der Elektromaschine 2 berechnet. Eingangsgrößen sind dabei z.B. die aktuelle Winkelgeschwindigkeit $\omega(t)$, die aktuelle Winkelbeschleunigung $d\omega/dt$, das Solldrehmoment $M_{Des}$ und das vorausschauend bestimmte Solldrehmoment $M_{DesPraed}$ für die Elektromaschine 2. Ein abgeschätztes Trägheitsmoment J, das die trägen Massen der rotatorisch bewegten Teile und die Fahrzeugmasse nachbildet, sowie ein abgeschätztes Fahrwiderstandsmoment $M_D$, das Luft-, Steigungs- und Rollwiderstand des Fahrzeuges nachbildet, bilden ebenfalls Eingangsgrößen für den Block 19. Die Abschätzungen können z.B. mit Hilfe einer Adaption oder eines Störgrößenbeobachters erfolgen. Bei einer anstehenden Übersetzungsänderung im Antriebsstrang 1 werden zukünftige Übersetzungen bzw. deren Auswirkungen auf Winkelgeschwindigkeit, Drehmomente und Trägheiten berücksichtigt.

Vorzugsweise sind die vorausschauenden Bestimmungen zeitlich aufeinander abgestimmt. Das heißt, die aktuelle Winkelgeschwindigkeit $\omega$ der Elektromaschine 2 wird zu einem späteren, in der Zukunft liegenden Zeitpunkt $t+\Delta t$ den zum Zeitpunkt t vorausschauend bestimmten Wert der Winkelgeschwindigkeit $\omega_{Praed}(t)$ erreichen:

$$\omega\,(t+\Delta t)\ =\ \omega_{Praed}\,(t)$$

Auch das aktuelle Solldrehmoment $M_{Des}$ soll zu dem späteren (zukünftigen) Zeitpunkt $t+\Delta t$ den zum Zeitpunkt t vorausschauend bestimmten Wert des Solldrehmomentes $M_{DesPraed}(t)$ erreichen:

$$M_{Des}(t+\Delta t) = M_{DesPraed}(t)$$

Das Produkt aus dem vorausschauend bestimmten Solldrehmoment $M_{DesPraed}$ und der vorausschauend bestimmten Winkelgeschwindigkeit $\omega_{Praed}$ (Block 20) ergibt eine vorausschauend bestimmte mechanische Leistung $P_{EIMmechPraed}$, die anhand des vorausschauend bestimmten Wirkungsgrades der Elektromaschine 2 in eine vorausschauend bestimmte, zukünftige elektrische Leistung $P_{EIMelPraed}$ umgerechnet wird (Block 21). Zusammen mit dem vorausschauend bestimmten, zukünftigen elektrischen Leistungsbedarf $P_{ConsPraed}$ von nicht weiter dargestellten Nebenaggregaten (z.B. eines elektrischen Lenksystems, eines elektrischen Bremssystems, eines elektrischen Klimasystems oder eines DC/DC-Wandlers) ergibt sich in Block 22 die von einer Energieversorgungseinheit 23 zukünftig zu erzeugende elektrische Leistung $P_{EIPraed}$. Die benötigte elektrische Leistung $P_{EI}$ wird zu dem späteren (zukünftigen) Zeitpunkt $t+\Delta t$ den zum Zeitpunkt t vorausschauend bestimmten Wert der elektrischen Leistung $P_{EIPraed}(t)$ erreichen:

$$P_{EI}(t+\Delta t) = P_{EIPraed}(t)$$

Die Energieversorgungseinheit 23 besteht beispielsweise aus der Batterie 3, dem aus Verbrennungsmotor 9 und der zweiten Elektromaschine 4 gebildeten Verbrennungsmotor-Generatorsystem (Range-Extender) 27 und/oder einer Brennstoffzelle 26. Das Verbrennungsmotor-Generatorsystem (Range-Extender) 27 oder die Brennstoffzelle 26 wird meist mit einem Pufferspeicher wie einer Batterie oder einem Doppelschichtkondensator kombiniert.

Die vorausschauend bestimmte Leistung $P_{EIPraed}$ wird zur Vorsteuerung bzw. Kompensation der begrenzten Ansteuerdynamik der Energieversorgungseinheit 23 benutzt. Das Verbrennungsmotor-Generatorsystem (Range-Extender) 27 und/oder die Brennstoffzelle 26 erzeugt dann bedarfsgerecht elektrische Energie. Damit lassen sich Lastspitzen minimieren. Der maximale Energieinhalt eines zusätzlichen Pufferspeichers kann reduziert werden.

Die vorausschauend bestimmte, zukünftig zu erzeugende Leistung $P_{EIPraed}$ kann benutzt werden, um einem Sollbetriebspunkt für die Energieversorgungseinheit 23 (beispielsweise eine Sollwinkelgeschwindigkeit $\omega_{GenDes}(t)$, ein Sollmoment $M_{GenDes}(t)$ und/oder einen Generatorsollrotorfluss $\psi_{RGenDes}(t)$ für das Verbrennungsmotor-Generatorsystem (Range-Extender) 27) zu ermitteln, der dann bis zum zukünftigen Zeitpunkt $t+\Delta t$ eingestellt ist. Das Verbrennungsmotor-Generatorsystem kann wirkungsgradoptimal bei reduzierter Winkelgeschwindigkeit und reduziertem Generatorrotorfluss betrieben werden, was zu einer begrenzten Ansteuerdynamik führt, da ein Aufbau der Winkelgeschwindigkeit bzw. des Generatorrotorflusses nicht sprungförmig erfolgen kann und eine höhere Ansprechzeit erfordert als beispielsweise ein Momentenaufbau bei maximalem Generatorrotorfluss. Bei der Brennstoffzelle 26 führt beispielsweise das Luftversorgungssystem zu einer begrenzten Ansteuerdynamik. Die begrenzte Ansteuerdynamik wird durch Vorsteuerung mit der vorausschauend bestimmten, zukünftig zu erzeugenden Leistung $P_{EIPraed}$ bzw. dem Sollbetriebspunkt für die Energieversorgungseinheit 23 kompensiert. Eine optimale Reaktion auf einen kurzfristig erhöhten elektrischen Leistungsbedarf, beispielsweise infolge einer sprungförmigen Erhöhung des Sollmomentes $M_{AccPed}$ ist erfindungsgemäß sichergestellt.

Anhand der vorausschauend bestimmten elektrischen Leistung $P_{EIPraed}$ wird die sich an der Energieversorgungseinheit 23 (der Batterie 3, der Brennstoffzelle 26 und/oder dem Verbrennungsmotor-Generatorsystem 27) zukünftig einstellende Spannung $U_{Praed}$ abgeschätzt. Zusammen mit dem vorausschauend bestimmten Solldrehmoment $M_{DesPraed}$ und der vorausschauend bestimmten Winkelgeschwindigkeit $\omega_{Praed}$ wird dann im Block 24 ein Sollwert für einen wirkungsgradoptimierten Rotorfluss $\psi_{RDes}$ der Elektromaschine 2 ermittelt. Zu einem zukünftigen Zeitpunkt $t+\Delta t$ werden die dann aktuellen Werte $\omega(t+4t)$, $M_{Des}(t+\Delta t)$, $U(t+\Delta t)$, die zum Zeitpunkt t vorausschauend bestimmten Werte $\omega_{Praed}(t)$, $M_{DesPraed}(t)$, $U_{Praed}(t)$ näherungsweise erreichen:

$$\omega(t+\Delta t) = \omega_{Praed}(t)$$

$$M_{Des}(t+\Delta t) = M_{DesPraed}(t)$$

$$U(t+\Delta t) = U_{Praed}(t)$$

Der aktuelle Rotorfluss $\psi_R$ der Elektromaschine 2 folgt dem Sollwert $\psi_{RDes}$ aufgrund der Ansteuerdynamik verzögert. Optimal ist, wenn der zum späteren (zukünftigen) Zeitpunkt $t+\Delta t$ aktuelle Rotorfluss $\psi_R(t+\Delta t)$ dem zum Zeitpunkt t auf Basis der vorausschauend bestimmten Werte $\omega_{Praed}(t)$, $M_{DesPraed}(t)$, $U_{Praed}(t)$ ermittelten Sollwert $\psi_{RDes}(t)$ entspricht:

$$\psi_R(t+\Delta t) = \psi_{RDes}(t).$$

Die Zeitspanne $\Delta t$ wird auf die Ansteuerdynamik des Rotorflusses abgestimmt und bei sich ändernder Ansteuerdynamik während des Betriebs angepasst. Das heißt zum Zeitpunkt $t+\Delta t$ stellt sich ein bezüglich den dann aktuellen Werten $\omega(t+\Delta t)$, $M_{Des}(t+\Delta t)$ und $U(t+\Delta t)$

wirkungsgradoptimaler Rotorfluss $\psi_R$(t+$\Delta$t) ein. Die Vorsteuerung arbeitet unter diesen Bedingungen optimal. Ein wirkungsgradoptimaler Betrieb der Elektromaschine 2 sowie eine optimale Reaktion bei beispielsweise einer sprungförmigen Änderung des Sollmomentes $M_{AccPed}$ sind erfindungsgemäß sichergestellt. Im Teillastbereich der Elektromaschine 2 führt ein reduzierter Rotorfluss zu einem verbesserten Wirkungsgrad und ist aus energetischen Gründen vorzuziehen. Allerdings muss bei reduziertem Rotorfluss (reduzierter Magnetisierung, Untermagnetisierung) zum Aufbau des erzeugten Momentes zunächst der Rotorfluss erhöht werden. Dies führt zu stark erhöhten Ansprechzeiten und stark reduzierter Ansteuerdynamik der Elektromaschine 2, verglichen mit einem Betrieb bei maximalem Rotorfluss. Die erfindungsgemäße Vorsteuerung kompensiert diesen Nachteil. Somit werden ein wirkungsgradoptimierter Betrieb der Elektromaschine 2 sowie eine dynamische Reaktion der Elektromaschine 2 sichergestellt.

In bestimmten Betriebszuständen, z.B. beim rekuperativen Bremsen der Elektromaschine 2 (dabei wirkt die Elektromaschine 2 als Generator und wandelt die durch das Kraftfahrzeug bereitgestellte mechanische Energie in elektrische Energie um, welche in der Energieversorgungseinheit 23 gespeichert wird) verhalten sich die umgesetzten Leistungen sehr dynamisch. Die Wirkung des Tiefpassfilters 11 wird eventuell zurückgenommen, was mit erhöhter Dynamik im Solldrehmoment $M_{Des}$ verbunden ist. In diesen Betriebszuständen kann eine Erhöhung des Rotorflusses sinnvoll sein (Rotorflussreserve), z.B. um möglichst viel Energie zu rekuperieren. Damit wird eine Reserve für eine sprungförmige betragsmäßige Erhöhung des von der Elektromaschine 2 erzeugten Drehmomentes geschaffen. Die Rotorflussreserve wird basierend auf vorausschauend bestimmten Werten, beispielsweise $\omega_{Praed}$(t), $M_{DesPraed}$(t) und $U_{Praed}$(t) ermittelt. Damit kann die Rotorflussreserve genau auf den Anwendungsfall abgestimmt werden. Eine zu hohe Reserve und damit zu starke Wirkungsgradverschlechterung wird vermieden.

Im allgemeinen Fall wird ein Sollwert für eine Reserve basierend auf einem oder mehreren vorausschauend bestimmten Antriebsparametern der Elektromaschine 2 und/oder des Kraftfahrzeugs ermittelt. Bevorzugt wird die vorausschauende Bestimmung der Antriebsparameter auf die Ansteuerdynamik der Reserve abgestimmt. D.h. zu einem zukünftigen Zeitpunkt t+$\Delta$t, zu dem die dann aktuellen Werte der Antriebsparameter die zum Zeitpunkt t vorausschauend bestimmten Werte der Antriebsparameter näherungsweise erreichen, soll auch die Reserve den zum Zeitpunkt t bestimmten Sollwert erreichen. Die Zeitspanne $\Delta$t wird auf die Ansteuerdynamik der Reserve abgestimmt und bei sich ändernder Ansteuerdynamik während des Betriebs angepasst. Die Reserve kann beispielsweise eine Momentenreserve sein, die über eine Rotorflussreserve eingestellt wird oder eine Leistungsreserve, die mittels Sollbetriebspunkt für die Energieversorgungseinheit 23 eingestellt wird. Die Reserve wird nicht benötigt, falls die vorausschauende Bestimmung der Antriebsparameter zu geringen Abweichungen führt. Die Reserve wird nur benötigt, falls zu einem zukünftigen Zeitpunkt t+$\Delta$t die dann aktuellen Werte der Antriebsparameter von den zum Zeitpunkt t vorausschauend bestimmten Werten der Antriebsparameter verstärkt abweichen, beispielsweise weil ein unerwarteter oder bei der vorausschauenden Bestimmung nicht berücksichtigter Zustand des Kraftfahrzeugs eintritt. Dies tritt beispielsweise auf, wenn ein elektrisches Lenk- oder Bremssystem in einem kritischen Fahrzustand plötzlich einen stark erhöhten Leistungsbedarf aufweist.

Bei nur einer Elektromaschine 2 und nur einer Energieversorgungseinheit 23 der Elektromaschine 2 sind eine Vorsteuerung bzw. eine Reserve der Elektromaschine 2 und eine Vorsteuerung bzw. eine Reserve der Energieversorgungseinheit 23 gleichermaßen erforderlich. Beispielsweise erfordert ein Momentenaufbau an der Elektromaschine 2 im motorischen Betrieb eine davon abhängige zusätzlich von der Energieversorgungseinheit 23 aufzubringende Leistung. Bevorzugt sind die Vorsteuerung bzw. Reserve der Elektromaschine 2 und die Vorsteuerung bzw. Reserve der Energieversorgungseinheit 23 aufeinander abgestimmt. Beispielsweise führen die Vorsteuerungen dazu, dass die Leistung der Elektromaschine 2 und die Leistung der Energieversorgungseinheit 23 zueinander passen. Ebenso sind die Reserven der Elektromaschine 2 und der Energieversorgungseinheit 23 aufeinander abgestimmt. Beispielsweise ermöglichen beide Reserven einen Momentenaufbau um dieselbe Momentendifferenz. Die beiden Reserven sind also bei einem die Reserven nutzenden Momentenaufbau gleichzeitig aufgebraucht. Die Betriebszustände, Vorsteuerungen und Reserven weiterer elektrischer Komponenten, z.B. von Nebenaggregaten, werden dabei berücksichtigt. Dadurch ist ein wirkungsgradoptimaler Betrieb der Elektromaschine 2 und der Energieversorgungseinheit 23 und damit des gesamten Kraftfahrzeugs möglich.

Die vorausschauend bestimmten Leistungen $P_{ElMmech\ Praed}$, $P_{ElMel\ Praed}$, $P_{Cons\ Praed}$, $P_{El\ Praed}$ und/oder die Sollbetriebspunkte für die Energieversorgungseinheit 23 (Verbrennungsmotor-Generatorsystem (Range-Extender) 27, Brennstoffzelle 26 bzw. Batterie 3) können benutzt werden, um die Kühlleistungen von Kühlsystemen vorzusteuern. Damit lassen sich Temperaturspitzen vermeiden, was Wirkungsgrad und Lebensdauer von Antriebsaggregaten und Energieversorgungseinheiten erhöht. Die Kühlleistungen können bedarfsgerecht reduziert werden, was zur Energieeinsparung beiträgt.

Die Erfindung kann auch bei mehreren Antriebsaggregaten eingesetzt werden, die gemeinsam wirken. Dazu ist das Verhalten einer Betriebsstrategie, die Drehmomente, Drehzahlen oder Leistungen auf die Antriebsaggregate aufteilt, zu berücksichtigen bzw. die Betriebsstrategie wird mit den vorausschauend bestimmten Werten als Eingangsgrößen nochmals berechnet, woraus sich eine vorausschauend bestimmte Aufteilung zusätzlich zu der aktuellen Aufteilung ergibt. Mit der vorausschauend bestimmten Aufteilung werden Antriebsaggregate und Energieversorgungseinheiten vorteilhaft vorgesteuert.

Wenn mehrere Antriebsaggregate auf unterschiedliche Antriebsachsen bzw. Antriebsräder wirken, sind den Antriebsaggregaten meist eigene Fahrbarkeitsfilter zugeordnet. Zur vorausschauenden Bestimmung wird das dynamische Verhalten der Fahrbarkeitsfilter benutzt, bzw. es werden die Filtereingangsgrößen herangezogen. Damit können auch Moment- oder Leistungsumlagerungen zwischen den Antriebsaggregaten vorausschauend bestimmt werden, z.B. bei allradgetriebenen Elektrofahrzeugen mit je einer Elektromaschine, je Antriebsachse oder Antriebsrad.

**Patentansprüche**

1. Verfahren zum Antrieb eines Kraftfahrzeuges, das mindestens ein Antriebsaggregat in Form einer Elektromaschine (2) aufweist, welchem eine Momentenanforderung ($M_{AccPed}$) zugeführt wird, wobei in Abhängigkeit der Momentenanforderung ($M_{AccPed}$) mindestens ein Antriebsparameter ($M_{AccPedPraed}$, $M_{DesPraed}$, $\omega_{Praed}$, $P_{ElPraed}$) der Elektromaschine (2) und/oder des Kraftfahrzeuges vorausschauend bestimmt wird, wobei die Elektromaschine (2) und/oder eine Energieversorgungseinheit (23) der Elektromaschine (2) in Abhängigkeit des mindestens einen, vorausschauend bestimmten Antriebsparameters ($M_{AccPedPraed}$, $M_{DesPraed}$, $\omega_{Praed}$, $P_{ElPraed}$) vorgesteuert werden, wobei der Antriebsparameter ($M_{AccPedPraed}$, $M_{DesPraed}$, $\omega_{Praed}$, $P_{ElPraed}$) in Abhängigkeit von seiner Dynamik zu einem vorgegebenen Zeitpunkt (t) ermittelt und zu einem späteren Zeitpunkt (t+$\Delta$t) wirksam wird, und wobei auf der Grundlage des, zu dem vorgegebenen Zeitpunkt (t) vorausschauend bestimmten Antriebsparameters ($M_{AccPedPraed}$, $M_{DesPraed}$, $\omega_{Praed}$, $P_{ElPraed}$) ein Sollwert für mindestens einen Betriebsparameter ($\psi_{RDes}$) der Elektromaschine (2) und/oder der Energieversorgungseinheit (23) ermittelt wird, **dadurch gekennzeichnet, dass** bei der Ermittlung des Sollwertes ($\psi_{RDes}$) eine Möglichkeit zur Überschreitung der vorausschauend ermittelten Antriebsparameter ($M_{AccPedPraed}$, $M_{DesPraed}$, $\omega_{Praed}$, $P_{ElPraed}$) durch Ermittlung eines Sollwertes für eine Reserve basierend auf einem oder mehreren vorausschauend bestimmten Antriebsparametern der Elektromaschine (2) und/oder des Kraftfahrzeugs berücksichtigt wird.

2. Verfahren nach Anspruch 1, **dadurch gekennzeichnet, dass** mehrere Antriebsparameter ($M_{AccPedPraed}$, $M_{DesPraed}$, $\omega_{Praed}$, $P_{ElPraed}$) der Elektromaschine (2) und/oder des Kraftfahrzeuges vorausschauend ermittelt werden, die gleichzeitig, zu einem späteren Zeitpunkt (t+$\Delta$t) wirksam werden.

3. Verfahren nach Anspruch 1, **dadurch gekennzeichnet, dass** der spätere Zeitpunkt (t+$\Delta$t) in Abhängigkeit der Dynamik der Elektromaschine (2) oder der Dynamik der Energieversorgungseinheit (23) so festgelegt wird, dass der Betriebsparameter ($\psi$) den Sollwert ($\psi_{RDes}$) zu dem späteren Zeitpunkt (t+$\Delta$t) erreicht.

4. Verfahren nach Anspruch 1 oder 3, **dadurch gekennzeichnet, dass** bei der Ermittlung des Sollwertes ($\psi_{RDes}$) des mindestens einen Betriebsparameters ($\psi$) die aktuellen und/oder vorausbestimmten zukünftigen Betriebszustände von Nebenaggregaten berücksichtigt werden.

5. Verfahren nach mindestens einem der Ansprüche 1 bis 4, **dadurch gekennzeichnet, dass** der Betriebsparameter eine Versorgungsspannung (U) oder Versorgungsleistung (P) der Energieversorgungseinheit (23) oder eine Magnetisierung ($\psi$) der Elektromaschine (2) ist.

6. Verfahren nach mindestens einem der vorhergehenden Ansprüche 1 bis 4, **dadurch gekennzeichnet, dass** der Sollwert ($\psi_{RDes}$) mindestens eines Betriebsparameters ($\psi$, U, P) unbeeinflusst von kurzzeitigen Eingriffen in dem Antriebsstrang (1) des Kraftfahrzeuges bleibt.

7. Verfahren nach mindestens einem der vorhergehenden Ansprüche, **dadurch gekennzeichnet, dass** der vorausschauend bestimmte, mindestens eine Antriebsparameter ($M_{AccPedPraed}$, $M_{DesPraed}$, $\omega_{Praed}$, $P_{ElPraed}$) und/oder der Sollwert mindestens eines Betriebsparameters ($\psi$, U, P) bei einer anstehenden Übersetzungsänderung im Antriebsstrang (1) basierend auf einer vorausschauend bestimmten Übersetzung ermittelt wird, bevor die aktuelle Übersetzung der vorausschauend bestimmten Übersetzung entspricht.

8. Verfahren nach mindestens einem der vorhergehenden Ansprüche, **dadurch gekennzeichnet, dass** der vorausschauend bestimmte Antriebsparameter ($M_{AccPedPraed}$, $M_{DesPraed}$, $\omega_{Praed}$, $P_{ElPraed}$) mittels Antriebsparametergrenzen ($M_{DesPraedMin}$, $M_{DesPraedMax}$) und/oder der Sollwert mindestens eines Betriebsparameters ($\psi$, U, P) mittels Betriebsparametergrenzen plausibilisiert wird.

9. Verfahren nach Anspruch 8, **dadurch gekenn-**

zeichnet, dass die Antriebsparametergrenzen ($M_{DesPraedMin}$; $M_{DesPraedMax}$) und/oder Betriebsparametergrenzen vorausschauend bestimmt werden.

10. Verfahren nach mindestens einem der vorhergehenden Ansprüche, **dadurch gekennzeichnet, dass** der Antriebsparameter ein Antriebsmoment ($M_{Des}$) eine Antriebsdrehzahl (w) und/oder eine Antriebsleistung (P) darstellt.

11. Verfahren nach Anspruch 10, **dadurch gekennzeichnet, dass** das Antriebsmoment ($M_{Des}$), die Antriebsdrehzahl (w) und/oder die Antriebsleistung (P) anhand des zeitlichen Verlaufes eines Antriebssollmomentes oder einer Antriebssollleistung vorausbestimmt werden.

12. Verfahren nach Anspruch 10 oder 11, **dadurch gekennzeichnet, dass** das Antriebsmoment ($M_{Des}$), die Antriebsdrehzahl (w) und/oder die Antriebsleistung (P) anhand des dynamischen Verhaltens mindestens einer verzögernd auf diese wirkende Einflussgröße vorausschauend ermittelt werden.

13. Verfahren nach Anspruch 10, 11 oder 12, **dadurch gekennzeichnet, dass** das Antriebsmoment ($M_{Des}$), die Antriebsdrehzahl ($\omega$) und/oder die Antriebsleistung (P) anhand des zeitlichen Verlaufes einer gemessenen oder modellierten oder beobachteten Antriebsstrangdrehzahl oder Fahrzeuglängsbewegung ermittelt werden.

**Claims**

1. Method for providing drive for a motor vehicle which has at least one drive assembly in the form of an electric machine (2), to which a torque request ($M_{AccPed}$) is fed, wherein at least one drive parameter ($M_{AccPedPraed}$, $M_{DesPraed}$, $\omega_{Praed}$, $P_{ElPraed}$) of the electric machine (2) and/or of the motor vehicle is determined predictively as a function of the torque request ($M_{AccPed}$), wherein the electric machine (2) and/or a power supply unit (23) of the electric machine (2) are pilot-controlled as a function of the at least one predictively determined drive parameter ($M_{AccPedPraed}$, $M_{DesPraed}$, $\omega_{Praed}$, $P_{ElPraed}$), wherein the drive parameter ($M_{AccPedPraed}$, $M_{DesPraed}$, $\omega_{Praed}$, $P_{ElPraed}$) is determined as a function of its dynamics at a predefined time (t) and becomes effective at a later time (t+$\Delta$t), and wherein on the basis of the drive parameter ($M_{AccPedPraed}$, $M_{DesPraed}$, $\omega_{Praed}$, $P_{ElPraed}$) which is predictively determined at the predefined time (t) a set point value for at least one operating parameter ($\psi_{RDes}$) of the electric machine (2) and/or of the power supply unit (23) is determined, **characterized in that** a possibility of the predictively determined drive parameter ($M_{AccPedPraed}$, $M_{DesPraed}$, $\omega_{Praed}$, $P_{ElPraed}$) being exceeded is taken into account, during the determination of the set point value ($\psi_{RDes}$), by determining a set point value for a reserve on the basis of one or more predictively determined drive parameters of the electric machine (2) and/or of the motor vehicle.

2. Method according to Claim 1, **characterized in that** a plurality of drive parameters ($M_{AccPedPraed}$, $M_{DesPraed}$, $\omega_{Praed}$, $P_{ElPraed}$) of the electric machine (2) and/or of the motor vehicle which become effective simultaneously, at a later time (t+$\Delta$t), are determined predictively.

3. Method according to Claim 1, **characterized in that** the later time (t+$\Delta$t) is defined as a function of the dynamics of the electric machine (2) or the dynamics of the power supply unit (23) in such a way that the operating parameter ($\psi$) reaches the set point value ($\psi_{RDes}$) at the later time (t+$\Delta$t).

4. Method according to Claim 1 or 3, **characterized in that** the current and/or predetermined future operating states of secondary assemblies are taken into account during the determination of the set point value ($\psi_{RDes}$) of the at least one operating parameter ($\psi$).

5. Method according to at least one of the preceding claims 1 to 4, **characterized in that** the operating parameter is a supply voltage (U) or supply power (P) of the power supply unit (23) or a magnetization ($\psi$) of the electric machine (2).

6. Method according to at least one of the preceding claims 1 to 4, **characterized in that** the set point value ($\psi_{RDes}$) of at least one operating parameter ($\psi$, U, P) remains uninfluenced by brief interventions in the drive train (1) of the motor vehicle.

7. Method according to at least one of the preceding claims, **characterized in that** the predictively determined, at least one drive parameter ($M_{AccPedPraed}$, $M_{DesPraed}$, $\psi_{Praed}$, $P_{ElPraed}$) and/or the set point value of at least one operating parameter ($\psi$, U, P) are/is determined during an imminent change in transmission ratio in the drive train (1), on the basis of a predictively determined transmission ratio, before the current transmission ratio corresponds to the predictively determined transmission ratio.

8. Method according to at least one of the preceding claims, **characterized in that** the plausibility of the predictively determined drive parameter ($M_{AccPedPraed}$, $M_{DesPraed}$, $\psi_{Praed}$, $P_{ElPraed}$) is checked by means of drive parameter limits ( ($M_{DesPraedMin}$; $M_{DesPraedMax}$) and/or the plausibility of the set point value of at least one operating parameter ($\psi$, U, P) is checked by means of operating parameter limits.

9. Method according to Claim 8, **characterized in that** the drive parameter limits ($M_{DesPraedMin}$; $M_{DesPraedMax}$) and/or operating parameter limits are determined predictively.

10. Method according to at least one of the preceding claims, **characterized in that** the drive parameter constitutes a drive torque ($M_{Des}$), a drive rotational speed ($\omega$) and/or a drive power (P).

11. Method according to Claim 10, **characterized in that** the drive torque ($M_{Des}$), the drive rotational speed ($\omega$) and/or the drive power (P) are determined in advance on the basis of the time profile of a drive set point torque or of a drive set point power.

12. Method according to Claim 10 or 11, **characterized in that** the drive torque ($M_{Des}$), the drive rotational speed ($\omega$) and/or the drive power (P) are determined predictively on the basis of the dynamic behaviour of at least one influencing variable which acts in a decelerating fashion thereon.

13. Method according to Claim 10, 11 or 12, **characterized in that** the drive torque ($M_{Des}$), the drive rotational speed ($\omega$) and/or the drive power (P) are determined on the basis of the time profile of a measured or modelled or observed drive train rotational speed or vehicle longitudinal movement.

## Revendications

1. Procédé destiné à l'entraînement d'un véhicule à moteur qui présente au moins un groupe moteur sous la forme d'une machine électrique (2), auquel est adjointe une exigence en matière de couple ($M_{AccPed}$), où au moins un paramètre d'entraînement ($M_{AccPedPraed}$, $M_{DesPraed}$, $\omega_{Praed}$, $P_{ElPraed}$) de la machine électrique (2) et/ou du véhicule à moteur est déterminé de manière prévisionnelle en fonction de l'exigence en matière de couple ($M_{AccPed}$), la machine électrique (2) et/ou une unité d'alimentation en énergie (23) de la machine électrique (2) étant pilotées en fonction de l'au moins un paramètre d'entraînement ($M_{AccPedPraed}$, $M_{DesPraed}$, $\omega_{Praed}$, $P_{ElPraed}$) déterminé de manière prévisionnelle, où le paramètre d'entraînement ($M_{AccPedPraed}$, $M_{DesPraed}$, $\omega_{Praed}$, $P_{ElPraed}$) est calculé en fonction de sa dynamique par rapport à un moment (t) préalablement indiqué et est actif à un moment ultérieur (t+$\Delta$t), et où une valeur nominale est calculée pour au moins un paramètre de service ($\psi_{RDes}$) de la machine électrique (2) et/ou de l'unité d'alimentation en énergie (23), sur la base du paramètre d'entraînement ($M_{AccPedPraed}$, $M_{DesPraed}$, $\omega_{Praed}$, $P_{ElPraed}$) déterminé de manière prévisionnelle au moment (t) préalablement indiqué, **caractérisé en ce que** lors de la détermination de la valeur nominale ($\psi_{RDes}$), une possibilité de dépassement des paramètres d'entraînement ($M_{AccPedPraed}$, $M_{DesPraed}$, $\omega_{Praed}$, $P_{ElPraed}$) calculés de manière prévisionnelle est prise en considération par la détermination d'une valeur nominale pour une réserve se basant sur un ou sur plusieurs paramètres d'entraînement, déterminés de manière prévisionnelle, de la machine électrique (2) et/ou du véhicule à moteur.

2. Procédé selon la revendication 1, **caractérisé en ce que** plusieurs paramètres d'entraînement ($M_{AccPedPraed}$, $M_{DesPraed}$, $\omega_{Praed}$, $P_{ElPraed}$) de la machine électrique (2) et/ou du véhicule à moteur sont calculés de manière prévisionnelle, lesquels paramètres d'entraînement sont actifs simultanément à un moment ultérieur (t+$\Delta$t).

3. Procédé selon la revendication 1, **caractérisé en ce que** le moment ultérieur (t+$\Delta$t) est fixé en fonction de la dynamique de la machine électrique (2) ou de la dynamique de l'unité d'alimentation en énergie (23), de telle sorte que le paramètre de service ($\psi$) atteint la valeur nominale ($\Psi_{RDes}$) au moment ultérieur (t+$\Delta$t).

4. Procédé selon la revendication 1 ou 3, **caractérisé en ce que** lors de la détermination de la valeur nominale ($\Psi_{RDes}$) de l'au moins un paramètre de service ($\psi$), les états de fonctionnement actuels et/ou ultérieurs préalablement déterminés des groupes auxiliaires sont pris en considération.

5. Procédé selon au moins l'une des revendications 1 à 4, **caractérisé en ce que** le paramètre de service est une tension d'alimentation (U) ou une puissance d'alimentation (P) de l'unité d'alimentation en énergie (23) ou une magnétisation ($\psi$) de la machine électrique (2).

6. Procédé selon l'une des revendications précédentes 1 à 4, **caractérisé en ce que** la valeur nominale ($\Psi_{RDes}$) de l'au moins un paramètre de service ($\psi$, U, P) demeure inaffectée par les brèves interventions dans le groupe motopropulseur (1) du véhicule à moteur.

7. Procédé selon au moins l'une des revendications précédentes, **caractérisé en ce que** l'au moins un paramètre d'entraînement ($M_{AccPedPraed}$, $M_{DesPraed}$, $\omega_{Praed}$, $P_{ElPraed}$) déterminé de manière prévisionnelle et/ou la valeur nominale d'au moins un paramètre de service ($\psi$, U, P) sont calculés dans le cas d'un changement de rapport imminent dans le groupe motopropulseur (1), en se basant sur une translation déterminée de manière prévisionnelle, avant que la translation actuelle corresponde à la translation déterminée de manière prévisionnelle.

**8.** Procédé selon au moins l'une des revendications précédentes, **caractérisé en ce que** le paramètre d'entraînement ($M_{AccPedPraed}$, $M_{DesPraed}$, $\omega_{Praed}$, $P_{ElPraed}$) déterminé de manière prévisionnelle est soumis à un test de plausibilité au moyen de valeurs de seuil des paramètres d'entraînement ($M_{DesPraedMin}$ : $M_{DesPraedMax}$) et/ou la valeur nominale d'au moins un paramètre de service ($\psi$, U, P) est soumise à un test de plausibilité au moyen de valeurs de seuil des paramètres de service.

**9.** Procédé selon la revendication 8, **caractérisé en ce que** les valeurs de seuil des paramètres d'entraînement ($M_{DesPraedMin}$ ; $M_{DesPraedMax}$) et/ou les valeurs de seuil des paramètres de service sont déterminées de manière prévisionnelle.

**10.** Procédé selon au moins l'une des revendications précédentes, **caractérisé en ce que** le paramètre d'entraînement représente un couple moteur ($M_{Des}$), une vitesse de rotation de l'entraînement ($\omega$) et/ou une puissance d'entraînement (P).

**11.** Procédé selon la revendication 10, **caractérisé en ce que** le couple moteur ($M_{Des}$), la vitesse de rotation de l'entraînement ($\omega$) et/ou la puissance d'entraînement (P) sont préalablement déterminés à l'aide de la courbe temporelle d'un couple moteur nominal ou d'une puissance d'entraînement nominale.

**12.** Procédé selon la revendication 10 ou 11, **caractérisé en ce que** le couple moteur ($M_{Des}$), la vitesse de rotation de l'entraînement ($\omega$) et/ou la puissance d'entraînement (P) sont calculés de manière prévisionnelle à l'aide du comportement dynamique d'au moins un facteur déterminant ayant un effet temporisateur sur ceux-ci.

**13.** Procédé selon la revendication 10, 11 ou 12, **caractérisé en ce que** le couple moteur ($M_{Des}$), la vitesse de rotation de l'entraînement ($\omega$) et/ou la puissance d'entraînement (P) sont calculés à l'aide de la courbe temporelle d'une vitesse de rotation du groupe motopropulseur ou d'un déplacement longitudinal du véhicule étant mesuré(e) ou modélisé(e) ou observé(e).

Fig. 1

EP 2 646 303 B1

$M_{AccPed}$

12   $M_{Grad}$

13   $M_{AccPedPraed}$

14   $M_{DesFltPraed}$

11   $M_{DesFlt}$

$M_{DesPraedMin}$   17   $M_{DesPraedMax}$   18   $M_{DesPraed}$

MAX   MIN

$M_{DesMin}$   15   $M_{DesMax}$   16   $M_{Des}$

MAX   MIN

$J$   19   $P_{EIMmechPraed}$

$\omega_{Praed}$   20

$\omega$

$\dot{\omega}$

$M_D$

X

**Fig. 2a**

Fig. 2b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10149905 B4
- EP 2070799 A2